# EUROPEAN PATENT SPECIFICATION

(11) **EP 2 744 625 B1**
(45) Date of publication and mention of the grant of the patent: **23.12.2020**
(21) Application number: 11757519.1
(22) Date of filing: 08.09.2011
(51) Int. Cl.: B25B 27/00

(54) **TOOL FOR REMOVING THE SEALANT FROM A PROTRUDING FASTENER**
WERKZEUG ZUM ENTFERNEN DES DICHTUNGSMITTEL VON EINEM VORSTEHENDEN BEFESTIGUNGSELEMENT
OUTIL POUR RETIRER L'AGENT DE SCELLEMENT À PARTIR D'UN ÉLÉMENT DE FIXATION SAILLANT

(43) Date of publication of application: 25.06.2014
(73) Proprietor: The Boeing Company, Chicago, IL 60606-1596 (US)
(72) Inventor: HAMILTON, Jeffrey, W, Renton, WA 98057 (US); STAVIG, Jr., Paul, N, Puyallup, WA 98373 (US); FULLER, Mark, D, Snohomish, WA 98290 (US)
(74) Representative: Boult Wade Tennant LLP
(86) International application number: PCT/US2011/050890
(87) International publication number: WO 2013/036235

(56) References cited:
- US-A1- 2003 061 918
- US-A1- 2007 098 509
- US-A1- 2008 050 191
- US-B1- 6 475 065

## Description

### BACKGROUND

The present disclosure relates to tooling associated with removing elastomeric sealants or coatings that are frequently applied to structures in order to seal them and to protect them from chemical attack. In particular the present disclosure applies to such tooling for removing sealant from protruding fasteners typically found in such structures.

Protruding fasteners in aircraft fuel tanks are frequently coated with elastomeric sealants or coatings in order to render them fluid tight. Typical elastomeric sealants include polysulfide or polythioether compounds. These same compounds may be applied as preformed and molded seal caps for protruding fasteners. Such seal caps are described in PPG Aerospace, PRC® -DeSoto, brochure titled "Customized Sealant Solutions PRC® Seal Caps".

In the event of a need for modification, repair, or inspection, these elastomeric sealants or coatings must be removed in order to access the protruding fasteners for the necessary maintenance or inspection procedures. Care must be exercised during the removal process to avoid damage to the protruding fasteners, surroundings, and underlying structural surfaces.

Some of the devices employed for mechanically removing elastomeric sealants include a rigid, polymeric, rotary-cutting tool as described in U.S. Patent No. 6,475,065, and the 3M™ SR Cutters No. 3 and No. 8 as described in 3M™ publication 61-5002-8019-5, titled "Surface Conditioning Products Technical Service Bulletin 3M™ SR Cutter", available from 3M™ Abrasive Systems Organization, 3M™ Center Building, 223-6N-1, St. Paul, MN 55144-1000.

In use, the conventional cutters may be used to remove sealant from a fastener by the operator manually moving a rotating cutter around the periphery of the fastener in an essentially orbital motion. Any residual sealant may then be removed manually with other hand tooling, such as a non-marring scraper or putty knife.

There is a continued need in the art for improvements to be made to tooling and methods for removing sealant from fasteners.

US 2003/0061918, in accordance with its abstract, states a method for making a cutting insert for use in an ID rotary cutter which includes obtaining the profile of a convex surface portion of a finished part to be milled with the cutter, translating the profile a minimum distance away from a reference axis for the convex surface portion, and generating a reference contour by rotating the translated profile about the reference axis. A reference profile for a cutting edge of the cutting insert is obtained as the intersection of the reference contour with a reference plane that is disposed at a predetermined helix angle relative to the reference axis.

US 5709018, in accordance with its abstract, states seal removal and installation tools for removing and installing seals from difficult to access locations. The seal removal tool is capable of gripping the seal without passing between the seal and the surface with which it is in sealing engagement. The seal installation tool is capable of simultaneously installing two seals on opposite ends of a shaft. The seal installation tool aligns the seals and the shaft and locates the seal in on the shaft to minimize the chance of damaging the seal. The seal installer also gradually expands the seal to the diameter of the shaft so that stresses in the seal are substantially uniform during installation.

### SUMMARY

A tool comprises a shank for connecting to a rotary drive, and a body disposed on the shank. The body includes a cavity with a working edge for engaging the sealant when the cavity is urged about the fastener. The working edge is disposed within the cavity. The working edge is contoured to approximate a profile of the fastener, and the body further includes a working edge disposed on a bottom face of the body. One of the advantages of the tool is that the cavity provides internal cutting and self-centering properties. These properties facilitate the circumferential removal of sealant from the fastener without the need of the operator to manually move the tool about the fastener. This is made possible because as the tool rotates it encircles the periphery of the fastener within a single revolution.

According to one aspect described herein, there is provided a method for removing sealant from a protruding fastener includes the alignment of the tool described above with a protruding fastener. Sealant is removed or loosened by an urging of the tool in the aligned direction towards the fastener while rotating the tool such that the fastener is encircled by a working edge. In other words, by linearly moving the tool toward the fastener along an axis central to the fastener, while rotating the tool about such axis, sealant is removed from the fastener. Advantageously the tool is rotated such that the fastener is encircled by the working edge within a single revolution of the tool.

Other features and advantages of the present disclosure will become apparent to those skilled in the art from a consideration of the following detailed description taken in conjunction with the accompanying drawings.

### BRIEF DESCRIPTION OF THE DRAWINGS

FIG. **1** is a perspective view a tool for removing sealant from a fastener according to a number of embodiments.
FIG. **2** is a perspective view of a tool for removing sealant from a fastener according to a number of embodiments, particularly showing the end for connection to a rotary drive.
FIGS. **3A**, **3B**, and **3C** are elevation views of a method for removing sealant according to a number of embodiments.

### DETAILED DESCRIPTION

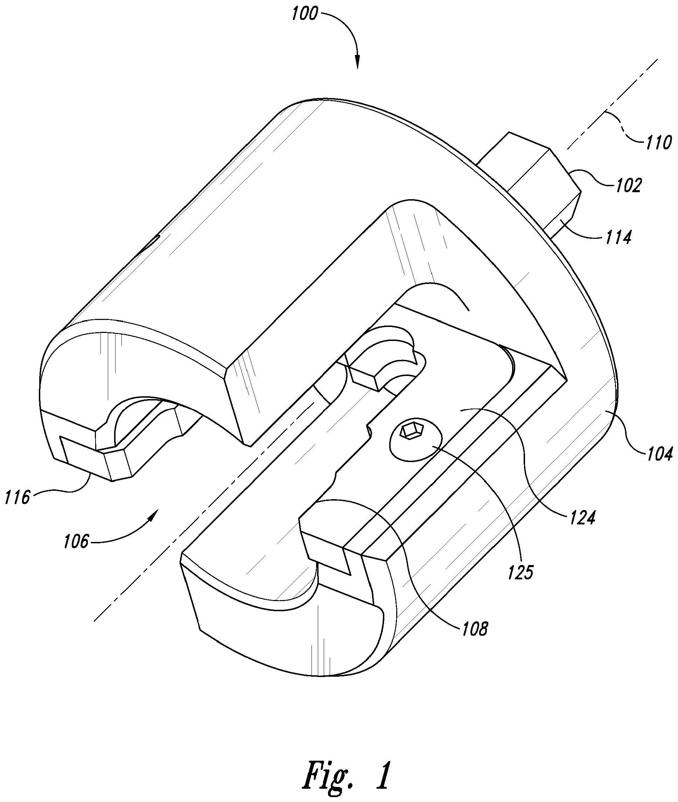

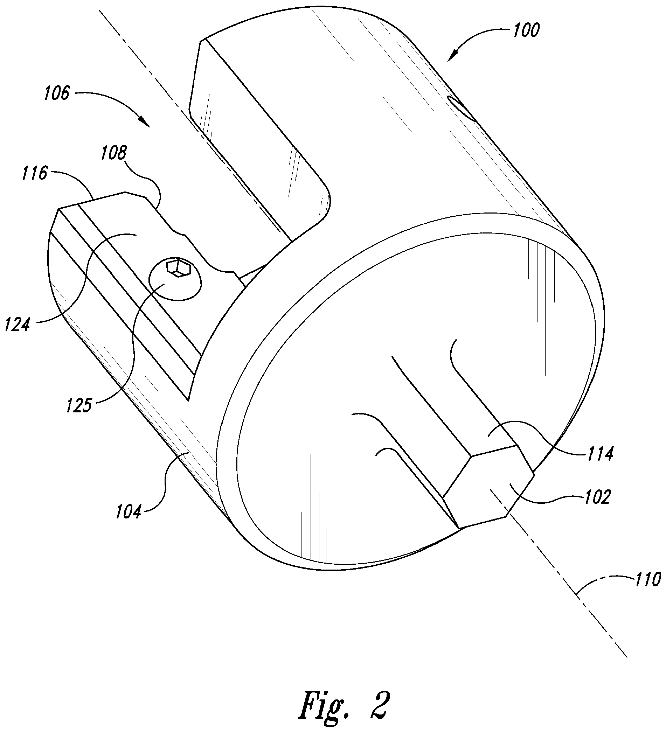

Referring particularly to FIGS. **1** and **2**, a tool **100** for removing sealant from a protruding fastener is shown. In a number of embodiments, the tool **100** may include a shank **102** and a body **104.** The shank **102** is configured for connecting to a rotary drive for imparting rotation to the tool **100.** The body **104** is disposed on the shank **102** and may include a cavity **106** with one or more working edges **108** for engaging the sealant when the cavity is urged about the fastener.

The working edge **108** may be contoured or profiled such that it approximates the profile of the protruding fastener in an installed condition. Furthermore the working edge **108** may be contoured or profiled to approximate the profile of the fastener in an installed and unsealed condition. Additionally the working edge **108** may have a planer or a non-planer form. For example the working edge may have a substantially helical form.

The body **104** may be permanently or semi-permanently joined to the shank **102** by any suitable method. In some embodiments, the body **104** may be integral with the shank **102.** In other embodiments, the tool **100** may include a reconnectable attachment between the body **104** and the shank **102** such that the body is releasably attachable to the shank. For example, the reconnectable attachment may be made by a threaded connection between the body **104** and the shank **102**, or the body **104** may be secured to the shank **102** with a nut. Other examples may include a detent connection or keyed connection. Alternatively, the body **104** may be joined to the shank **102** in a more permanent manner by molding or casting of the body **104** to the shank **102**, or through a press fit connection between the body **104** and shank **102.**

The shank **102** also includes a drive section **114** for connection to a rotary drive. The drive section **114** may be cylindrical or faceted. In some embodiments the drive section **114** may include hex flats for use in a hex drive. In other embodiments it may include connection provisions for use in a quick change coupler, collet, or a three-jaw chuck.

In some embodiments, the body of the tool **100** may also include a working edge **116** disposed on a bottom face for aiding in the removal of sealant from surfaces immediately surrounding and adjacent the protruding fastener. In other embodiments, the body **104** of the tool **100** may also include a working edge disposed on an outer surface for aiding in the removal of sealant from surfaces adjacent the fastener.

The body **104** may be comprised of any suitable material, metal or non-metal; however, the working edges **108** and **116** of the body **104** are preferably made from material having low bulk hardness relative to the protruding fastener to mitigate marring of the fastener and the surrounding surface. Suitable materials may include materials primarily comprised of non-metallic compounds such as a polymer or a soft metal like an aluminum alloy. In some embodiments the material may have a bulk Rockwell R hardness in the range of between about **60** and about **130.** In other embodiments the body and working edges **108** and **116** may be composed of the same material.

In yet other embodiments the working edges **108** and **116** may be part of a replaceable insert **124.** The insert **124** may be retained in the body **104** by a fastener **125.** Accordingly, the body **104** may accommodate inserts of different shapes, sizes, and cutting profiles. In this manner the different inserts may conform to a variety of different protruding fastener geometries.

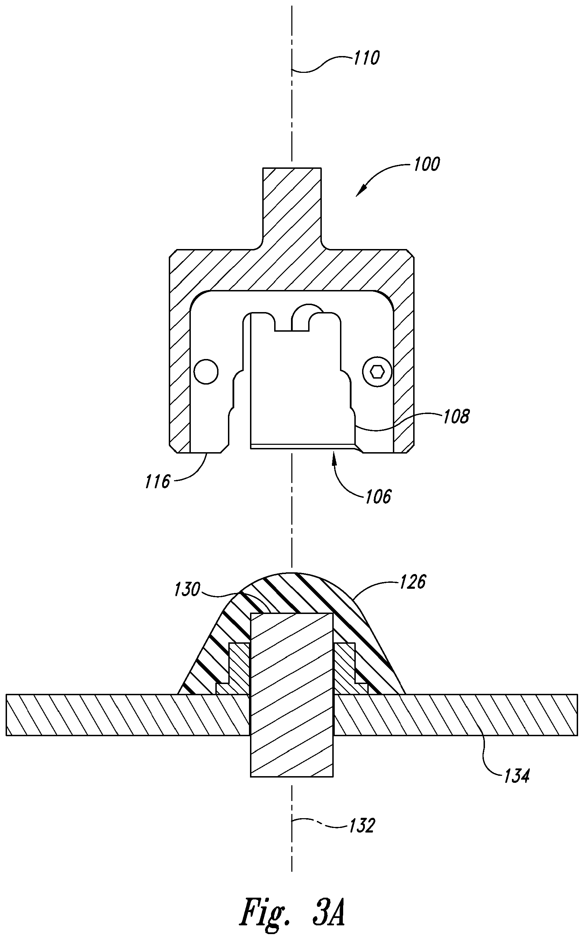

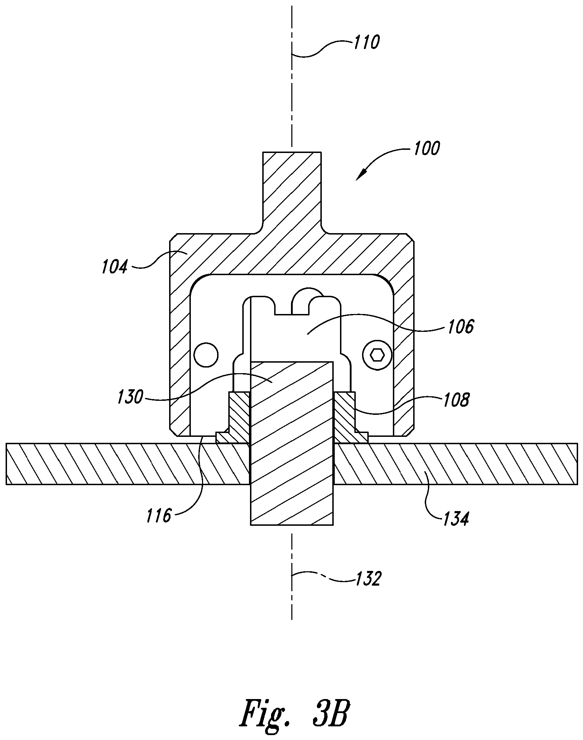

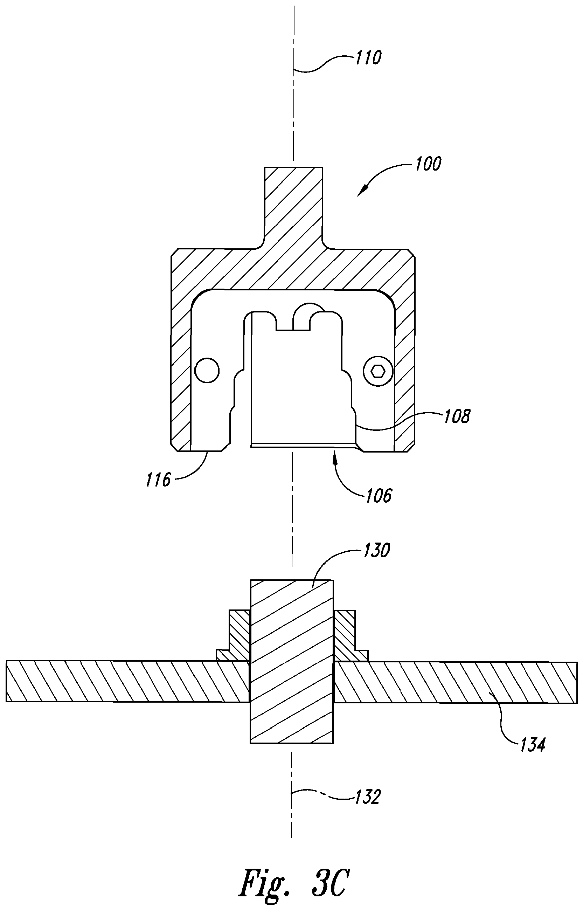

Referring now to FIGS. **3A**, **3B**, and **3C**, the tool **100** may be used to remove sealant, or sealant caps, **126** from a protruding fastener **130** and the surrounding area. Typical applications include the removal of sealant from protruding fasteners found in aircraft, marine, and ground transportation vehicle structures. In each of these instances the tool **100** is attached to a rotary drive. Sealant removal is accomplished by aligning the tool **100** with a protruding fastener **130** and urging the cavity of the tool **100** towards the fastener such that the working edges **108** and **116** of the tool **100** engage the sealant **126** while the tool **100** is spun about a central axis **110** by a rotary drive.

As shown in FIG. **3A**, the tool **100** may be located proximate, and in general alignment, to a fastener **130** of interest. While being rotated or spun, the tool **100** may be urged, or repeatedly urged, against the sealant **126** encapsulating the fastener **130** until it contacts or stops against the fastener **130**, as shown in FIG. **3B**, or the structure **134.** Once contact is established the tool **110** may be withdrawn as depicted in FIG. **3C****.**

In addition, as shown specifically in FIG. **3B**, the fastener **130** is received within the cavity **106** of the body **130** when the tool **100** is urged over the fastener **130.** In addition, in some embodiments, with further or progressive urging of the tool **100** along an axis central toward the fastener **132**, the cavity **106** may be configured such that the fastener **130** is received therein when the tool **100** is positioned against or abutting the structure **134.** In addition, in some embodiments, with further urging of the tool **100** along axis **132**, sealant may be removed from the structure **134** by working edge **116.**

Those skilled in the art will understand that the preceding described aspects and embodiments provide the foundation for numerous alternatives and modifications thereto. These other modifications are also within the scope of the present disclosure. Accordingly, the present disclosure is not limited to that precisely as shown and described herein.

## Claims

1. A tool (100) for removing sealant from a protruding fastener (130), the tool comprising:
a shank (102) for connecting to a rotary drive; and
a body (104) disposed on the shank and including a cavity (106) with a working edge (108) for engaging the sealant when the cavity is urged about the fastener;
wherein the working edge (108) is disposed within the cavity (106),
wherein the working edge (108) is contoured to approximate a profile of the fastener, and
wherein the body further includes a working edge (116) disposed on a bottom face of the body.

2. The tool of claim 1 further comprising a replaceable insert (124), wherein the replaceable insert includes the working edges (108, 116).

3. The tool of any preceding claim wherein the tool is configured for use with a hex drive.

4. The tool of any preceding claim wherein the working edges (108, 116) are made from a material having a Rockwell R hardness between about 60 and about 126.

5. The tool of any preceding claim wherein the working edges (108, 116) include a non-metallic material.

6. A method for removing sealant from a protruding fastener (130) comprising:
aligning the tool (100) of any of claims 1 to 5 with a protruding fastener;
urging the tool towards the fastener; and
rotating the tool such that the fastener is encircled by the working edge (108) to remove sealant from the fastener.

7. The method of claim 6 wherein the rotating step further comprises rotating the tool such that the fastener is encircled by the working edge (108) within a single revolution of the tool.

8. The method of either claim 6 or 7 wherein the fastener is substantially undamaged when the sealant is removed.

9. The method of any of claims 6 to 8, comprising urging the cavity of the tool against the sealant of the fastener.

10. The method of any of claims 6 to 9, wherein the protruding fastener is part of an aircraft.

## Patentansprüche

1. Werkzeug (100) zum Entfernen von Dichtungsmittel von einem vorstehenden Befestigungselement (130), wobei das Werkzeug umfasst:
einen Schaft (102) zum Verbinden mit einem Drehantrieb; und
einen Körper (104), der auf dem Schaft angeordnet ist und einen Hohlraum (106) mit einer Arbeitsschneide (108) zum Eingriff mit dem Dichtungsmittel aufweist, wenn der Hohlraum um das Befestigungselement herum gedrückt wird;
wobei die Arbeitsschneide (108) innerhalb des Hohlraums (106) angeordnet ist,
wobei die Arbeitsschneide (108) konturiert ist, um ein Profil des Befestigungsmittels zu approximieren, und
wobei der Körper ferner eine Arbeitsschneide (116) aufweist, die an einer Unterseite des Körpers angeordnet ist.

2. Werkzeug nach Anspruch 1, das ferner einen austauschbaren Einsatz (124) umfasst, wobei der austauschbare Einsatz die Arbeitsschneiden (108, 116) aufweist.

3. Werkzeug nach einem der vorhergehenden Ansprüche, wobei das Werkzeug zur Verwendung mit einem Sechskantantrieb konfiguriert ist.

4. Werkzeug nach einem der vorhergehenden Ansprüche, wobei die Arbeitsschneiden (108, 116) aus einem Material mit einer Rockwell-Härte R zwischen etwa 60 und etwa 126 gefertigt sind.

5. Werkzeug nach einem der vorhergehenden Ansprüche, bei dem die Arbeitsschneiden (108, 116) ein nichtmetallisches Material umfassen.

6. Verfahren zum Entfernen von Dichtungsmaterial von einem hervorstehenden Befestigungselement (130), umfassend:
Ausrichten des Werkzeugs (100) nach einem der Ansprüche 1 bis 5 auf ein vorstehendes Befestigungselement;
Drücken des Werkzeugs gegen das Befestigungselement; und
Drehen des Werkzeugs, so dass das Befestigungselement von der Arbeitskante (108) umrundet wird, um das Dichtungsmittel von dem Befestigungselement zu entfernen.

7. Verfahren nach Anspruch 6, bei dem der Schritt des Drehens ferner das Drehen des Werkzeugs derart umfasst, dass das Befestigungsmittel von der Arbeitskante (108) innerhalb einer einzigen Umdrehung des Werkzeugs umgeben ist.

8. Verfahren nach Anspruch 6 oder 7, bei dem das Befestigungselement im Wesentlichen unbeschädigt ist, wenn das Dichtungsmittel entfernt ist.

9. Verfahren nach einem der Ansprüche 6 bis 8, umfassend das Drücken des Hohlraums des Werkzeugs gegen das Dichtungsmittel des Befestigungselements.

10. Verfahren nach einem der Ansprüche 6 bis 9, bei dem das hervorstehende Befestigungselement Teil eines Flugzeugs ist.

## Revendications

1. Outil (100) pour retirer de l'agent de scellement à partir d'une fixation faisant saillie (130), l'outil comprenant :
une tige (102) pour une connexion à un entraînement rotatif ; et
un corps (104) disposé sur la tige et comprenant une cavité (106) avec un bord de travail (108) pour coopérer avec l'agent de scellement lorsque la cavité est poussée autour de la fixation ;
dans lequel le bord de travail (108) est disposé à l'intérieur de la cavité (106),
dans lequel le bord de travail (108) est profilé pour se rapprocher d'un profil de la fixation, et
dans lequel le corps comprend en outre un bord de travail (116) disposé sur une face inférieure du corps.

2. Outil selon la revendication 1, comprenant en outre un insert remplaçable (124), dans lequel l'insert remplaçable comprend les bords de travail (108, 116).

3. Outil selon l'une quelconque des revendications précédentes, dans lequel l'outil est configuré pour être utilisé avec un entraînement hexagonal.

4. Outil selon l'une quelconque des revendications précédentes, dans lequel les bords de travail (108, 116) sont constitués d'un matériau ayant une dureté Rockwell R comprise entre environ 60 et environ 126.

5. Outil selon l'une quelconque des revendications précédentes, dans lequel les bords de travail (108, 116) comprennent un matériau non métallique.

6. Procédé pour enlever de l'agent de scellement à partir d'une fixation faisant saillie (130) comprenant les étapes consistant à :
aligner l'outil (100) selon l'une quelconque des revendications 1 à 5 avec une fixation faisant saillie ;
pousser l'outil vers la fixation ; et
faire tourner l'outil de telle sorte que la fixation soit encerclée par le bord de travail (108) pour enlever l'agent de scellement à partir de la fixation.

7. Procédé selon la revendication 6, dans lequel l'étape de mise en rotation comprend en outre une mise en rotation de l'outil de telle sorte que la fixation soit encerclée par le bord de travail (108) en un seul tour de l'outil.

8. Procédé selon la revendication 6 ou 7, dans lequel la fixation n'est pratiquement pas endommagée lorsque l'agent de scellement est retiré.

9. Procédé selon l'une quelconque des revendications 6 à 8, comprenant l'étape consistant à pousser la cavité de l'outil contre l'agent de scellement de la fixation.

10. Procédé selon l'une quelconque des revendications 6 à 9, dans lequel la fixation faisant est une partie d'un aéronef.
